Europäisches Patentamt

European Patent Office

Office européen des brevets

(11) Veröffentlichungsnummer: **0 292 766**
**B1**

# (12) EUROPÄISCHE PATENTSCHRIFT

(45) Veröffentlichungstag der Patentschrift:
14.11.90

(21) Anmeldenummer: 88107410.8

(22) Anmeldetag: 07.05.88

(51) Int. Cl.⁵: **C11D 3/37, C11D 3/00**

(54) Verwendung von wasserlöslichen Copolymerisaten, die Monomere mit mindestens zwei ethylenisch ungesättigten Doppelbindungen einpolymerisiert enthalten, in Wasch-und Reinigungsmitteln.

(30) Priorität: 16.05.87 DE 3716544

(43) Veröffentlichungstag der Anmeldung:
30.11.88 Patentblatt 88/48

(45) Bekanntmachung des Hinweises auf die Patenterteilung:
14.11.90 Patentblatt 90/46

(84) Benannte Vertragsstaaten:
AT BE CH DE ES FR GB IT LI NL SE

(56) Entgegenhaltungen:
EP-A- 0 168 547
DE-A- 2 814 329
DE-A- 3 002 710
DE-A- 3 514 364
DE-A- 3 604 223

(73) Patentinhaber: BASF Aktiengesellschaft,
Carl-Bosch-Strasse 38, D-6700 Ludwigshafen(DE)

(72) Erfinder: Trieselt, Wolfgang, Dr., Aiwin-Mittasch-Platz 1,
D-6700 Ludwigshafen(DE)
Erfinder: Baur, Richard, Dr., Nelkenstrasse 1,
D-6704 Mutterstadt(DE)
Erfinder: Winkler, Ekhard, Dr., Pfalzring 74,
D-6704 Mutterstadt(DE)
Erfinder: Diessel, Paul, Asternstrasse 16,
D-6704 Mutterstadt(DE)
Erfinder: Seelmann-Eggebert, Hans-Peter, Dr.,
Friedrichstrasse 8, D-6905 Schriesheim(DE)
Erfinder: Boeckh, Dieter, Dr., Trifelsring 63,
D-6703 Limburgerhof(DE)
Erfinder: Hartmann, Heinrich, Dr., Weinheimer
Strasse 46, D-6703 Limburgerhof(DE)

## Beschreibung

In Wasch- und Reinigungsmitteln benötigt man bekanntlich als Inhaltsstoffe neben oberflächenaktiven Stoffen sogenannte Gerüststoffe (Builder). Den Buildern kommen in Wasch- und Reinigungsmittelformulierungen vielfältige Aufgaben zu, z.B. sollen sie die Tenside bei der Schmutzablösung unterstützen, die Härtebildner des Wassers unschädlich machen, sei es durch Sequestrierung der Erdalkalimetallionen oder durch Dispergierung der aus dem Wasser ausgefällten Härtebildner, die Dispergierung und Stabilisierung des kolloidal in der Waschflotte verteilten Schmutzes fördern und zur Konstanthaltung des optimalen pH-Wertes beim Waschen als Puffer wirken. Bei festen Wasch- und Reinigungsmittelformulierungen sollen die Builder einen positiven Beitrag zu einer guten Pulverstruktur bzw. Rieselfähigkeit leisten. Builder auf Phosphatbasis erfüllen in hohem Maße die oben beschriebenen Aufgaben, die an einen Builder gestellt werden. So war lange Zeit Pentanatriumtriphosphat unumstritten der wichtigste Gerüststoff (Builder) in Wasch- und Reinigungsmitteln. Die in Waschmitteln enthaltenen Phosphate gelangen aber praktisch unverändert in das Abwasser. Da die Phosphate ein guter Nährstoff für Wasserpflanzen und Algen sind, sind sie für die Eutrophierung von Seen und langsam fließenden Gewässern verantwortlich. In Kläranlagen, die keine sogenannte dritte Reinigungsstufe haben, in der eine spezielle Ausfällung der Phosphate stattfindet, werden diese nicht genügend entfernt. Man hat daher schon frühzeitig nach Stoffen gesucht, die Phosphate in Waschmitteln als Gerüststoff ersetzen können.

So haben inzwischen in phosphatfreien oder phosphatarmen Waschmitteln wasserlösliche Ionenaustauscher auf Basis von Zeolithen Eingang gefunden. Die Zeolithe können jedoch aufgrund ihrer spezifischen Eigenschaften die Phosphate nicht allein als Builder ersetzen. Die Zeolithe werden in ihrer Wirkung unterstützt von anderen Waschmittelzusätzen, bei denen es sich um carboxylgruppenhaltige Verbindungen handelt, wie Zitronensäure, Weinsäure, Nitrilotriessigsäure und vor allem polymere carboxylgruppenhaltige Verbindungen bzw. um deren Alkali- und Ammoniumsalze. Unter den zuletzt genannten Verbindungen kommt den Homopolymerisaten der Acrylsäure sowie den Copolymerisaten aus Acrylsäure und Maleinsäure als Waschmittelzusatz eine besondere Bedeutung zu, vgl. US-PS 3 308 067 und EP-PS 25 551.

Die genannten Polymerisate sind ökologisch unbedenklich, weil sie in den Kläranlagen am Belebtschlamm adsorbiert und zusammen damit aus dem Wasserkreislauf entfernt werden. Diese Polymerisate sind jedoch im Sinne der heute an die Abwasserinhaltsstoffe gestellten Anforderungen nicht genügend biologisch abbaubar.

Der vorliegenden Erfindung liegt die Aufgabe zugrunde, Additive für Wasch- und Reinigungsmittel auf Basis von Polymerisaten zur Verfügung zu stellen, die gegenüber den bisher dafür verwendeten Polymerisaten eine weitaus bessere biologische Abbaubarkeit besitzen.

Die Aufgabe wird erfindungsgemäß gelöst durch Verwendung von wasserlöslichen Copolymerisaten, die

a) 99,5 bis 15 Mol.% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomeren, das erhältlich ist durch Veresterung von

b1) monoethylenisch ungesättigten $C_3$- bis $C_6$-Monocarbonsäuren mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen,

c) 0 bis 84,5 Mol.% wenigstens einer monoethylenisch ungesättigten $C_4$- bis $C_6$-Dicarbonsäure,

d) 0 bis 20 Mol.% eines oder mehrerer Hydroxyalkylester mit 2 bis 6 C-Atomen in der Hydroxyalkylgruppe von monoethylenisch ungesättigten $C_3$- bis $C_6$-Carbonsäuren und

e) 0 bis 30 Mol.% andere, mit a), b), c) und d) copolymerisierbare, wasserlösliche, monoethylenisch ungesättigte Monomere

mit der Maßgabe einpolymerisiert enthalten, daß die Summe der Angaben in Mol.% a) bis e) immer 100 beträgt und die einen K-Wert von 8 bis 120 (bestimmt am Na-Salz der Copolymerisate nach H. Fikentscher in wäßriger Lösung bei 25°C, einem pH-Wert von 7 und einer Polymerkonzentration des Na-Salzes von 1 Gew.%) haben, als Zusatz zu Wasch- und Reinigungsmitteln.

Die oben beschriebenen Copolymerisate wirken in Wasch- und Reinigungsmitteln als Builder und tragen somit zu einer Waschaktivierung von Tensiden der Wasch- und Reinigungsmittel, der Reduktion der Inkrustierung auf dem gewaschenen Textilgut und zu einer Schmutzdispergierung in der Waschflotte bei. Diese Copolymerisate sind gegenüber den bisher in Waschmitteln verwendeten Polymerisaten jedoch überraschenderweise biologisch abbaubar und zeigen in einigen Fällen sogar eine bessere Wirkung.

Die wasserlöslichen Copolymerisate werden hergestellt durch Copolymerisieren von Monomermischungen aus

a) 99,5 bis 15 Mol.% wenigstens einer monoethylenisch ungesättigten $C_3$- bis $C_6$-Monocarbonsäure,

b) 0,5 bis 20 Mol% wenigstens eines mindestens zwei ethylenisch ungesättigte, nicht konjugierte Doppelbindungen aufweisenden Comonomeren, das erhältlich ist durch Veresterung von

b1) monoethylenisch ungesättigten $C_3$- bis $C_6$-Monocarbonsäuren mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen,

c) 0 bis 84,5 Mol.% wenigstens einer monoethylenisch ungesättigten $C_4$- bis $C_6$-Dicarbonsäure,

d) 0 bis 20 Mol.% eines oder mehrerer Hydroxyalkylester mit 2 bis 6 C-Atomen in der Hydroxyalkylgruppe von monoethylenisch ungesättigten $C_3$- bis $C_6$-Carbonsäuren und

e) 0 bis 30 Mol.% anderen, mit a) bis d) copolymerisierbaren, wasserlöslichen, monoethylenisch ungesättigten Monomeren.

Die Summe der Angaben in Mol.% a) bis e) beträgt dabei immer 100.

Als Komponente a) der wasserlöslichen Copolymerisate kommen monoethylenisch ungesättigte $C_3$- bis $C_6$-Monocarbonsäuren in Betracht. Geeignete Carbonsäuren dieser Art sind beispielsweise Acrylsäure, Methacrylsäure, Ethacrylsäure, Vinylessigsäure, Allylessigsäure und Crotonsäure. Vorzugsweise verwendet man als Monomer der Komponente a) Acrylsäure und/oder Methacrylsäure. Die Monomeren der Komponente a) sind zu 99,5 bis 15 Mol.% am Aufbau der Copolymerisate beteiligt.

Wesentlicher Bestandteil der Copolymerisate sind die Monomeren der Komponente b). Hierbei handelt es sich um Comonomere, die mindestens zwei ethylenisch ungesättigte, nicht konjugierte Doppelbindungen aufweisen und durch mindestens eine Ester-Gruppe verbunden sind. Diese Comonomeren bewirken im allgemeinen eine Erhöhung des Molekulargewichts der Copolymerisate und sind zu 0,5 bis 20, vorzugsweise 1 bis 12 Mol% am Aufbau der Copolymerisate beteiligt.

Die Comonomeren b) sind z.B. erhältlich durch Umsetzung von

b1) monoethylenisch ungesättigten $C_3$- bis $C_6$-Monocarbonsäuren oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, einwertigen, monoethylenisch ungesättigten $C_3$- bis $C_6$-Alkoholen oder deren Mischungen.

Statt der freien Säuren kann man als Komponenten b1) auch deren esterbildende Derivate, wie Anhydride, Säurehalogenide oder Säureester, insbesondere solche mit niederen einfachen Alkoholen, einsetzen.

Mehrwertige, 2 bis 6 C-Atome aufweisende Alkohole sind beispielsweise Glykol, Glycerin, Pentaerythrit, Sorbit und Monosaccharide, wie Glucose, Mannose, Galactose, Uronsäuren, wie Galacturonsäure, und Zuckersäuren, wie Schleimsäure oder Galactonsäure.

Unter wasserlöslichen Polyalkylenglykolen sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten. Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente b2) kommen außerdem Polyglycerine eines Molekulargewichts bis 2.000 in Betracht. Vorzugsweise verwendet man von dieser Stoffklasse Diglycerin, Triglycerin und Tetraglycerin. Außerdem kommen Polyvinylalkohole eines Molekulargewichts bis 10.000, vorzugsweise Polyvinylalkohole mit einem Molekulargewicht bis zu 2.000 in Betracht. Geeignete Polyvinylalkohole, die durch Hydrolyse aus Polyvinylacetat hergestellt werden, können dabei durch vollständige oder teilweise Hydrolyse von Polyvinylacetat erhalten werden.

Vorzugsweise werden Comonomere b) aus Acrylsäure, Methacrylsäure bzw. Methacrylsäureanhydrid und Ethylenglykol, Polyethylenglykol eines Molekulargewichts bis 2.000, Glycerin, Diglycerin, Triglycerin, Tetraglycerin, sowie Polyglycerinen eines Molekulargewichts bis 2.000, Pentaerythrit, Monosacchariden, Neopentylglykol und $\alpha,\omega$-Diolen mit 3 bis 6 C-Atomen eingesetzt.

Als Monomer der Komponente c) werden monoethylenisch ungesättigte $C_4$- bis $C_6$-Dicarbonsäuren eingesetzt. Hierbei handelt es sich beispielsweise um Maleinsäure, Itaconsäure, Citraconsäure, Mesaconsäure, Fumarsäure und Methylenmalonsäure. Vorzugsweise kommen Maleinsäure oder Itaconsäure als Monomer c) zur Anwendung. Die Monomeren c) sind zu 0 bis 84,5, vorzugsweise 5 bis 60 Mol% am Aufbau der Copolymerisate beteiligt.

Die Copolymerisate können gegebenenfalls Hydroxyalkylester mit 2 bis 6 C-Atomen in der Hydroxyalkylgruppe von monoethylenisch ungesättigten $C_3$- bis $C_6$-Carbonsäuren als Komponente d) einpolymerisiert enthalten. Die Hydroxyalkylestergruppen dieser Gruppe von Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemische der Butan diole oder Propandiole, Hexandiol-1,6 und Neopentylglykol. Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) und c) genannt sind. Als Komponente d) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Hydroxypropylmonomaleinat, Hydroxypropyldimaleinat, Hydroxy-n-butylmonomaleinat, Hydroxy-n-butyldimaleinat und Hydroxyethylmonoitaconat. Von den Hydroxyalkylestern der monoethylenisch ungesättigten Dicarbonsäuren kommen sowohl die Mono- als auch die Diester der Dicarbonsäuren mit den oben genannten mehrwertigen Alkoholen in Betracht.

Vorzugsweise verwendet man als Komponente d) Hydroxyethylacrylat, Hydroxyethylmethacrylat, Butan-1,4-diolmonoacrylat und die technischen Gemische von Hydroxypropylacrylaten. Hierbei sind von besonderer technischer Bedeutung die Isomerengemische aus 2-Hydroxy-1-propylacrylat und 1-Hydroxy-2-propylacrylat. Diese Hydroxyalkylacrylate werden durch Umsetzung von Acrylsäure mit Propylenoxid hergestellt. Die Monomeren der Gruppe d) sind zu 0 bis 20, vorzugsweise 0 bis 15 Mol% in polymerisierter Form im Copolymerisat enthalten.

Die Copolymerisate können gegebenenfalls als Komponente e) andere, mit a), b), c) und d) copolymerisierbare, wasserlösliche monoethylenisch ungesättigte Monomere enthalten. Geeignete Monomere dieser Art sind beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin, Vinylacetat sowie Mischungen der genannten Monomeren. Diejenigen Monomere dieser Gruppe, die Säuregruppen enthalten, können bei der Copolymerisation in Form der freien Säuren oder auch in partiell oder vollständig mit Alkalimetallbasen oder Ammoniumbasen neutralisierter Form eingesetzt werden. Die basischen Acrylate, wie Diethylaminoethylacrylat, werden mit Säuren neutralisiert bzw. quaternisiert und dann der Copolymerisation unterworfen. Die Monomeren e) sind zu 0 bis 30, vorzugsweise 0 bis 20 Mol% am Aufbau der Copolymerisate beteiligt. Sie dienen lediglich zur Modifizierung der Copolymerisate.

Die Summe der Angaben in Mol% der Komponenten a) bis e) beträgt immer 100. Die Copolymerisation wird in wäßrigem Medium, vorzugsweise in rein wäßrigem Medium, in Gegenwart von Polymerisationsinitiatoren sowie gegebenenfalls Reglern durchgeführt. Sie kann nach verschiedenen Verfahrensvarianten erfolgen, z.B. kann man die Monomeren a) bis e) in Form wäßriger Lösungen diskontinuierlich in einer Batch-Fahrweise polymerisieren. Außerdem ist es möglich, zunächst einen Teil der Monomeren und einen Teil des Initiators im Polymerisationsreaktor vorzulegen, unter Inertgasatmosphäre auf die Polymerisationstemperatur zu erwärmen und dann die übrigen Monomeren und den Initiator nach Fortschritt der Polymerisation dem Reaktor zuzugeben. Die Polymerisationstemperaturen liegen im Bereich von 20 bis 200°C. Bei Temperaturen oberhalb von 100°C arbeitet man in Druckapparaturen. Vorzugsweise beträgt die Polymerisationstemperatur 40 bis 150°C.

In einer bevorzugten Ausführungsform des Herstellverfahrens wird zunächst das Comonomer b) hergestellt, indem man

b1) Methacrylsäureanhydrid in einem Reaktor vorlegt und darin mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, einwertigen, monoethylenisch ungesättigten $C_3$- bis $C_6$-Akoholen oder deren Mischungen

bei Temperaturen von 50 bis 200°C umsetzt. Diese Umsetzung wird vorzugsweise in Abwesenheit von Wasser vorgenommen. Anstelle der freien ethylenisch ungesättigten Carbonsäuren oder der Anhydride kann man bei der Herstellung der Comonomeren b) auch von den entsprechenden Estern mit einwertigen $C_1$- bis $C_4$-Alkoholen ausgehen. In diesen Fällen wird eine Umesterung durchgeführt und vorzugsweise der dabei entstehende $C_1$- bis $C_4$-Alkohol aus dem Reaktionsgemisch abdestilliert. Gegebenenfalls können dabei übliche Veresterungskatalysatoren mitverwendet werden.

Pro Mol der Verbindungen b2) setzt man - sofern es sich dabei um mehrwertige Alkohole handelt - mindestens 2 Mol einer Verbindung der Komponente b1) ein. Die Temperatur bei der Umsetzung beträgt vorzugsweise 50 bis 150°C. Die Reaktion wird soweit geführt, daß praktisch ein quantitativer Umsatz der Komponente b2) gegeben ist. Das Comonomer b) kann in einer monoethylenisch ungesättigten $C_3$- bis $C_6$-Monocarbonsäure gemäß a) gelöst werden und dann zusammen mit den als Lösungsmittel dienenden Monomeren gemäß a) der Copolymerisation unterworfen werden.

Das Comonomer b) kann jedoch auch im Reaktionsansatz, in dem es hergestellt wurde, verbleiben und darin zunächst durch Zugabe von Wasser bzw. verdünnter wäßriger Natronlauge gelöst werden. Diese Lösung wird anschließend durch Zugabe der Comonomeren a) und gegebenenfalls c) bis e) copolymerisiert. Die Copolymerisation wird bei einem pH-Wert der wäßrigen Lösung von 2 bis 9, vorzugsweise von 3 bis 7 durchgeführt. Die Monomeren a), die jeweils Carbonsäuregruppen enthalten, können in Form der freien Carbonsäuren oder in neutralisierter, vorzugsweise in partiell neutralisierter Form copolymerisiert werden, wobei der Neutralisationsgrad 0 bis 100, vorzugsweise 10 bis 85 Mol% beträgt. Die Neutralisation erfolgt vorzugsweise mit Alkalimetall- oder Ammoniumbasen. Hierunter sind beispielsweise Natronlauge, Kalilauge, Soda, Pottasche oder Ammoniumbasen wie Ammoniak, $C_1$- bis $C_{18}$-Alkylamine, Dialkylamine, wie Dimethylamin, Di-n-butylamin, Dihexylamin, tertiäre Amine wie Trimethylamin, Triethylamin, Tributylamin, Triethanolamin sowie quaternisierte Stickstoffbasen, z.B. Tetramethylammoniumhydroxid, Trimethyllaurylammoniumhydroxid und Trimethylbenzylammoniumhydroxid zu verstehen. Vorzugsweise verwendet man zum Neutralisieren Natronlauge, Kalilauge oder Ammoniak. Die Neutralisation kann jedoch auch mit Erdalkalimetallbasen, z.B. Ca-Hydroxid oder $MgCO_3$, vorgenommen werden.

Als Polymerisationsinitiatoren werden vorzugsweise wasserlösliche Radikalbildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin und Ascorbinsäure in Form der sogenannten Redox-Initiatoren verwendet werden. Geeignete wasserlösliche organische Peroxide sind beispielsweise Acetylacetonperoxid, Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2'-Azobis(2-amidinopropan)dihydrochlorid, 2,2'-Azobis(N,N'-dimethylen)iso butyramidin-dihydrochlorid, 2-(Carbamoylazo)isobutyronitril und 4,4'-Azobis-(4-cyanovaleriansäure). Man kann die Polymerisation auch mit wasserunlöslichen Initiatoren, wie Dibenzoylperoxid, Dicyclohexylperoxidicarbonat, Dilaurylperoxid oder Azodiisobutyronitril, starten.

Die Initiatoren werden in Mengen von 0,1 bis 15, vorzugsweise 0,5 bis 10 Gew.%, bezogen auf die Summe der bei der Polymerisation eingesetzten Monomeren, angewendet. Die Polymerisationsinitiatoren können entweder zusammen mit den Monomeren oder getrennt davon in Form von wäßrigen Lösungen kontinuierlich oder absatzweise der zu polymerisierenden Mischung zugegeben werden.

Die Copolymerisation wird vorzugsweise in Gegenwart von Reglern durchgeführt. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20°C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, Ammoniumformiat und Hydroxylammoniumsulfat. Die Regler werden in Mengen von 0 bis 25 Gew.%, bezogen auf die Summe der bei der Polymerisation eingesetzten Monomeren, verwendet. Die besonders wirksamen Regler, die vorzugsweise in Betracht kommen, werden in Mengen von 2 bis höchstens 15 Gew.% eingesetzt. Sofern in Gegenwart von Reglern gearbeitet wird, beträgt die minimale Einsatzmenge 0,2 Gew.%, bezogen auf die zu polymerisierenden Monomeren.

Besonders bevorzugt ist die Herstellung von Copolymerisaten aus

a) Acrylsäure und/oder Methacrylsäure, und
b) Diacrylaten und/oder Dimethacrylaten von Ethylenglykol, Neopentylglykol, Glycerin, Polyethylenglykol eines Molekulargewichts bis 1500 und Butandiol-1,4.

Bei der Copolymerisation der Monomeren a) bis e) werden wäßrige Polymerisatlösungen erhalten, die einen Polymerisatgehalt bis zu 70 Gew.% aufweisen. Es ist selbstverständlich auch möglich, stark verdünnte, z.B. 1 %ige wäßrige Lösungen herzustellen, jedoch wird die Copolymerisation aus wirtschaftlichen Erwägungen so geführt, daß man mindestens 20 gew.%ige wäßrige Copolymerisatlösungen herstellt. Die Lösungen können nach der Copolymerisation auf einen pH-Wert im Bereich von 6,5 bis 7 eingestellt werden, sofern nicht die Polymerisation ohnehin in diesem Bereich durchgeführt wurde. Die Copolymerisate können durch Eindampfen der wäßrigen Lösungen gewonnen werden. Sie haben einen niedrigen Restmonomerengehalt und sind überraschenderweise biologisch abbaubar. Die biologische Abbaubarkeit der Copolymerisate beträgt nach DIN 38 412, Teil 24, Statischer Test (L25) bis zu 100 %, und liegt in der Regel zwischen 20 und 95 %.

Die Copolymerisate sind wasserlöslich. Falls sie sich in der freien Säureform nicht in Wasser lösen, so gelingt es, sie durch partielle oder vollständige Neutralisation mit NaOH, KOH, Ammoniak oder Aminen in eine wasserlösliche Form zu überführen. Copolymerisate, deren Alkali- oder Ammoniumsalze, von denen sich mindestens 20 g pro Liter Wasser bei einer Temperatur von 20°C lösen, werden im vorliegenden Zusammenhang als wasserlöslich bezeichnet. Die Copolymerisate haben überraschenderweise den Vorteil, daß sie im Bereich geringer Polymerkonzentrationen keine Ausfällungen in Ca- und/oder Mg-Ionen enthaltenden wäßrigen Lösungen zeigen. Daher kann man stabile Lösungen der Copolymerisate in Trinkwasser herstellen, ohne daß es zu Ausfällungen der Erdalkalisalze der Copolymerisate kommt.

Der K-Wert der Copolymerisate liegt in dem Bereich von 8 bis 120, vorzugsweise 12 bis 100. Die K-Werte der Copolymerisate werden jeweils am Natriumsalz in wäßriger Lösung bei 25°C, einem pH-Wert von 7 und einer Polymerkonzentration des Natriumsalzes des Copolymerisats von 1 Gew.% bestimmt. Sofern die Copolymerisate in Form anderer Salze oder freien Säuren vorliegen, müssen sie vor der Bestimmung des K-Wertes zunächst in die Natrium-Salze umgewandelt werden.

Die Copolymerisate enthalten Polymersegmente aus Einheiten der Monomeren a) und gegebenenfalls c) mit einem Molekulargewicht (Gewichtsmittel) bis zu 15 000, vorzugsweise 300 bis 8 000. Diese Polymersegmente können analytisch z.B. dadurch nachgewiesen werden, daß man die Copolymerisate einer vier- bis sechsstündigen Hydrolyse im alkalischen pH-Bereich, z.B. bei pH-Werten von 9 bis 14 und Temperaturen bis zu 100°C in wäßrigem Medium unterwirft. Nach der Hydrolyse werden die Reaktionsprodukte durch Zugabe von organischen, mit Wasser mischbaren Lösemitteln, wie Methanol, Aceton, Isopropanol oder Mischungen aus Methanol und Aceton aus der wäßrigen Lösung gefällt. Das ausgefällte Produkt wird mit einem Lösemittel (Methanol oder Aceton) nachgewaschen und anschließend getrocknet. Die Bestimmung der molaren Massen der Hydrolyseprodukte erfolgte durch Gel-Permeations-Chromatographie (= GPC) mit wäßrigen Elutionsmitteln. Die Eichung der Trennsäulen erfolgte mit eng verteilten Polystyrolsulfonaten der Fa. Pressure Chem. Comp. und Umrechnung auf die molaren Masseneinheiten von Na-Polyacrylat nach dem universellen Eichprinzip von BENOIT (J. Chim. Phys. 63 (19669) 1507) unter Verwendung der Meßdaten von Spatorico und Beyer J. Appl. Polym. Sci. 19 (1975) 2933).

Die oben beschriebenen Copolymerisate werden erfindungsgemäß als Zusatz zu Wasch- und Reinigungsmitteln verwendet. Sie können dabei pulverförmigen oder auch flüssigen Formulierungen zugesetzt werden. Die Wasch- und Reinigungsmittelformulierungen basieren üblicherweise auf Tensiden und gegebenenfalls Buildern. Bei reinen Flüssigwaschmitteln wird meist auf den Einsatz von Buildern verzichtet. Als Tenside eignen sich beispielsweise anionische Tenside, wie $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole, ferner nichtionische Tenside, wie $C_8$- bis $C_{12}$-Alkylphenolethoxylate, $C_{12}$-$C_{20}$-Alkanolalkoxylate, sowie Blockcopolymerisate des Ethylenoxids und Propylenoxids. Die Endgruppen der Polyalkylenoxide können gegebenenfalls verschlossen sein. Hierunter soll verstanden werden, daß die freien OH-Gruppen der Polyalkylenoxide verethert, verestert, acetalisiert und/oder aminiert sein können. Eine weitere Modifizierungsmöglichkeit besteht darin, daß man die freien OH-Gruppen der Polyalkylenoxide mit Isocyanaten umsetzt.

Zu den nichtionischen Tensiden zählen auch $C_4$- bis $C_{18}$-Alkylglucoside sowie die daraus durch Alkoxylierung erhältlichen alkoxylierten Produkte, insbesondere diejenigen, die durch Umsetzung von Alkylglucosiden mit Ethylenoxid herstellbar sind. Die in Waschmitteln einsetzbaren Tenside können auch zwitterionischen Charakter haben sowie Seifen darstellen. Die Tenside sind im allgemeinen in einer Menge von 2 bis 50, vorzugsweise 5 bis 45 Gew.% am Aufbau der Wasch- und Reinigungsmittel beteiligt.

In den Wasch- und Reinigungsmitteln enthaltene Builder sind beispielsweise Phosphate, z.B. ortho-Phosphat, Pyrophosphat und vor allem Pentanatriumtriphosphat, Zeolithe, Soda, Polycarbonsäuren, Nitrilotriessigsäure, Zitronensäure, Weinsäure, die Salze der genannten Säuren sowie monomere, oligomere oder polymere Phosphonate. Die einzelnen Stoffe werden in unterschiedlichen Mengen zur Herstellung der Waschmittelformulierungen eingesetzt, z.B. Soda in Mengen bis zu 80 %, Phosphate in Mengen bis zu 45 %, Zeolithe in Mengen bis zu 40 %, Nitrilotriessigsäure und Phosphonate in Mengen bis zu 10 % und Polycarbonsäuren in Mengen bis zu 20 %, jeweils bezogen auf das Gewicht der Stoffe sowie auf die gesamte Waschmittelformulierung. Wegen der starken Umweltbelastungen, die der Einsatz von Phosphaten mit sich bringt, wird der Gehalt an Phosphaten in Wasch- und Reinigungsmitteln in zunehmendem Maße erniedrigt, so daß Waschmittel heute bis höchstens 25 % Phosphat enthalten oder sogar vorzugsweise phosphatfrei sind.

Die biologisch abbaubaren Copolymerisate können auch als Zusatz zu Flüssigwaschmitteln verwendet werden. Flüssigwaschmittel enthalten üblicherweise als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen.

Waschmittelformulierungen können außerdem als weitere Zusätze Korrosionsinhibitoren, wie Silikate, enthalten. Geeignete Silikate sind beispielsweise Natriumsilikat, Natriumdisilikat und Natriummetasilikat. Die Korrosionsinhibitoren können in Mengen bis zu 25 Gew.% in der Wasch- und Reinigungsmittelformulierung enthalten sein. Weitere übliche Zusätze zu Wasch- und Reinigungsmitteln sind Bleichmittel, die in einer Menge bis zu 30 Gew.% darin enthalten sein können. Geeignete Bleichmittel sind beispielsweise Natrium-Perborat, Natriumpercarbonat oder chlorabgebende Verbindungen, wie Chlorisocyanurate. Eine andere Gruppe von Additiven, die gegebenenfalls in Waschmitteln enthalten sein kann, sind Vergrauungsinhibitoren. Bekannte Stoffe dieser Art sind Carboxymethylcellulose, Methylcellulose, Hydroxypropylmethylcellulose und Pfropfpolymerisate von Vinylacetat auf Polyalkylenoxide eines Molekulargewichts von 1000 bis 15 000. Vergrauungsinhibitoren können in Mengen bis zu 5 % in der Waschmittelformulierung enthalten sein. Weitere übliche Zusatzstoffe zu Waschmitteln, die gegebenenfalls darin enthalten sein können, sind optische Aufheller, Enzyme und Parfüm. Die pulverförmigen Waschmittel können außerdem noch bis zu 50 Gew.% eines Stellmittels, wie Natriumsulfat, enthalten. Die Waschmittelformulierungen können wasserfrei sein bzw. geringe Mengen, z.B. bis zu 10 Gew.% Wasser enthalten. Flüssigwaschmittel enthalten üblicherweise bis zu 80 Gew.% Wasser. Übliche Waschmittelformulierungen sind beispielsweise detailliert in der DE-OS 35 14 364 beschrieben, auf die ausdrücklich hingewiesen wird.

Die oben beschriebenen biologisch abbaubaren Copolymerisate können sämtlichen Wasch- und Reinigungsmittelformulierungen zugesetzt werden. Die dafür angewendeten Mengen liegen zwischen 0,5 und 25, vorzugsweise zwischen 1 bis 15 Gew.%, bezogen auf die gesamte Formulierung. Die zur Anwendung gelangenden Mengen an biologisch abbaubaren Copolymerisaten betragen in den allermeisten Fällen vorzugsweise 2 bis 10 Gew.%, bezogen auf die Wasch- und Reinigungsmittelmischung. Von besonderer Bedeutung ist der Einsatz der erfindungsgemäß zu verwendenden Additive in phosphatfreien und phosphatarmen Wasch- und Reinigungsmitteln. Die phosphatarmen Formulierungen enthalten bis höchstens 25 Gew.% Pentanatriumtriphosphat oder Pyrophosphat. Aufgrund der biologischen Abbaubarkeit werden die erfindungsgemäß zu verwendenden Copolymerisate vorzugsweise in phosphatfreien Formulierungen eingesetzt.

Falls gewünscht, können die erfindungsgemäß zu verwendenden biologisch abbaubaren Copolymerisate zusammen mit biologisch nicht abbaubaren Copolymerisaten aus Acrylsäure und Maleinsäure bzw. Homopolymerisaten aus Acrylsäure in Waschmittelformulierungen eingesetzt werden. Die zuletzt genannten biologisch nicht abbaubaren Polymerisate sind bisher als Inkrustierungsinhibitoren in Waschmittelformulierungen verwendet worden. Außer den bereits genannten Polymerisaten kommen auch Copolymerisate aus $C_3$- bis $C_6$-Mono- und Dicarbonsäuren oder Maleinsäureanhydrid und $C_1$- bis $C_4$-Alkylvinylethern in Betracht. Das Molekulargewicht der Homo- und Copolymerisate beträgt 1000 bis 100 000. Falls gewünscht, können diese Inkrustierungsinhibitoren in einer Menge bis zu 10 Gew.%, bezogen auf die gesamte Formulierung, neben den erfindungsgemäß zu verwendenden biologisch abbaubaren Copolymerisaten in Waschmitteln eingesetzt werden. Obwohl die bekannten Inkrustationinhibitoren auf Basis der oben angegebenen Polymerisate biologisch nicht abbaubar sind, können sie aber dennoch in Kläranlagen zusammen mit dem Belebtschlamm, an den sie adsorbiert werden, aus dem Abwasser entfernt werden. Die biologisch abbaubaren Copolymerisate können sowohl in Form der freien Säuren, in vollständig neutralisierter Form oder in partiell neutralisierter Form zu Waschmittelformulierungen zugesetzt werden.

Die in den Beispielen angegebenen K-Werte wurden nach H. Fikentscher, Cellulosechemie, Band 13, 58-64 und 71-74 (1932) bestimmt. Dabei bedeutet $K=k \cdot 10^3$. Die Messungen wurden in allen Fällen am Natriumsalz in wäßriger Lösung bei 25°C, einem pH-Wert von 7 und einer Polymerkonzentration des Natriumsalzes von 1 Gew.% vorgenommen. Die biologische Abbaubarkeit der Copolymerisate wurde nach DIN 38 142, Teil 24, Statischer Test (L25), bestimmt.

Beispiele

Herstellung der biologisch abbaubaren Copolymerisate

Allgemeine Herstellvorschrift für die Copolymeren 1 bis 7

In einem mit Rührer, Thermometer, 4 Zulaufgefäßen und Inertgaszuleitung versehenen 2 l Glasreaktor werden n Mol Monomer c) in 150 ml Wasser gelöst und auf 90 bis 95°C erwärmt. Gleichbeginnend werden p Mol Monomer b), gelöst in q Mol Monomer a), die dem Monomer a) äquivalente Menge 25 %iger Natronlauge sowie gegebenenfalls m Gew.% Regler als 20 %ige Lösung in Wasser innerhalb 4 h unter Inertgas zudosiert; ebenso werden 5 Gew.% Wasserstoffperoxid als 10 %ige Lösung in Wasser innerhalb 5 h zugegeben. Die viskose Lösung wird 2 h bei 95°C nachpolymerisiert und mit 25 %iger wäßriger Natronlauge auf einen pH-Wert von 6,5 gestellt. In Tabelle 1 sind nähere Angaben über die Einsatzstoffe sowie über die Copolymerisate enthalten.

Allgemeine Herstellungsvorschrift für die Copolymeren 8 bis 11

In einem mit Rührer, Thermometer, 4 Zulaufgefäßen und Inertgaszuleitung versehenen 2 l Glasreaktor werden 100 ml vollentsalztes Wasser bei 80°C vorgelegt und gleichbeginnend über einen Zeitraum von 4 h eine Lösung von p Mol Monomer b) in q Mol Monomer a), m Gewichtsteile Regler, gelöst in 50 ml Wasser, 0,69 bis 1,50 Mol Natriumhydroxid, 25 % in Wasser, sowie über einen Zeitraum von 5 h 2 Gewichtsteile 2,2'-Azobis(2-amidinopropan)dihydrochlorid, gelöst in 50 ml Wasser zudosiert. Im Anschluß wird weitere 2 h bei 80°C nachpolymerisiert und mit 50 %iger wäßriger NaOH auf einen pH-Wert von 6,5 eingestellt. Die Tabelle 1 enthält nähere Angaben über die bei der Copolymerisation eingesetzten Stoffe sowie über die Copolymerisate.

Tabelle 1

| Copolymer | Monomer a) AS q[Mol]/ [Mol.%] | Monomer c) MSA n[Mol]/ [Mol.%] | Monomer b) p[Mol]/ [Mol.%] | Regler m [Gew.%] | K-Wert | Biolog. Abbaubar- keit [%] |
|---|---|---|---|---|---|---|
| 1 | 1,85/77,1 | 0,5/20,8 | Diethylenglykol-diacrylat 0,050/2,1 | - | 57,3 | 39 |
| 2 | 1,85/73,7 | 0,5/21,0 | Diethylenglykol-diacrylat 0,125/5,3 | ME 6 | 54,0 | 62 |
| 3 | 1,25/52,6 | 1,0/42,1 | Tripropylenglykol-diacrylat 0,125/5,3 | ME 6 | 48,9 | 45 |
| 4 | 1,25/52,6 | 1,0/42,1 | Thiodiethylenglykol-dimethacrylat - 0,125/5,3 | ME 6 | 39,3 | 69 |
| 5 | 1,88/76,9 | 0,5/20,5 | $PEG_{400}$-diacrylat 0,063/2,6 | ME 5 | 56,2 | 63 |
| 6 | 1,91/77,8 | 0,5/20,4 | $PEG_{400}$-diacrylat 0,044/1,8 | ME 5 | 42,5 | 55 |
| 7 | 1,25/52,6 | 1,0/42,1 | Hexandiol-dimethacrylat 0,125/5,3 | ME 4 | 38,9 | 52 |
| 8 | 1,38/95,8 | - | Tripropylenglykol-diacrylat 0,063/4,2 | ME 10 | 55,4 | 47 |
| 9 | 1,50/96,9 | - | $PEG_{400}$-diacrylat 0,048/3,1 | AF 10 | 23,8 | 77 |
| 10 | 1,44/96,9 | - | Ethylenglykol-diacrylat 0,046/3,1 | AF 10 | 41,9 | 42 |
| 11 | 1,38/95,8 | - | Tripropylenglykol-diacrylat 0,06/4,2 | AF 10 | 44,7 | 45 |

EP 0 292 766 B1

Tabelle 1 (Fortsetzung)

| Copolymer | Monomer a)<br>AS<br>q Mol]/<br>[Mol.%] | Monomer c)<br>MSA<br>n[Mol]/<br>[Mol.%] | Monomer b)<br>p[Mol]/<br>[Mol.%] | Regler<br>m<br>[Gew.%] | K-Wert | Biolog.<br>Abbaubar-<br>keit<br>[%] |
|---|---|---|---|---|---|---|
| Vergleich mit dem Stand der Technik | | | | | | |
| 12 | Na-Salz eines Copolymerisats aus 70 Gew.% Acrylsäure und 30 Gew.% Maleinsäure | | | | 60,0 | <10 |
| 13 | Na-Salz eines Homopolymerisats der Acrylsäure | | | | 100 | <10 |

Abkürzungen: ME  =  Mercaptoethanol

AF  =  Ammoniumformiat

HAS =  Hydroxylammoniumsulfat

$PEG_{400}$ = Polyethylenglykol eines Molekulargewichts von 400

Für die unter Nr. 1, 2, 6, 8 und 9 in Tabelle 1 angegebenen Copolymerisate wurde das Ausfällverhalten bei pH 7,5 in wäßrigen Lösungen geprüft, die 10 bis 10.000 mg/l Ca-Ionen (in Form von $CaCl_2$) enthielten. Folgende Ca-Ionenkonzentrationen wurden getestet: 10, 50, 75, 100, 150, 500, 1000 und 10.000 mg/l. Die Copolymerisatkonzentrationen wurden von 0,1 bis 7 mg/l variiert (geprüft wurden folgende Konzentrationen: 0,1; 0,5; 1,0; 2; 3; 4 und 7 mg Copolymerisat/l Wasser/. Dabei traten selbst nach 20tägiger Lagerung der wäßrigen Lösungen der Copolymerisate in Gegenwart von Ca-Ionen keine Ausfällungen auf, während ein Copolymerisat aus 30 Gew.% Maleinsäure und 70 Gew.% Acrylsäure vom K-Wert 60 unter den angegebenen Prüfbedingungen immer Ausfällungen ergab.

Die biologische Abbaubarkeit der Copolymerisate wurde zusätzlich durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

Dinatriumhydrogenphosphat mit 2 Wasser 7 g/l

Kaliumdihydrogenphosphat 3 g/l

Natriumchlorid 0,5 g/l

Ammoniumchlorid 1,0 g/l

Lösung von Spurenelementen 2,5 ml/l pH 7,0

(hergestellt nach T. Bauchop und S.R. Elsden, J. gen. Mikrobiol. 23, 457-469 (1960)).

Die in Tabelle 1 unter Nr. 1 bis 11 beschriebenen Copolymerisate wurden den Nährmedien jeweils in Konzentrationen von 10 g/l zugegeben.

Erdproben wurden entweder in Flüssigmedium zugegeben und dort 7 Tage bei 30°C geschüttelt, oder als wäßrige Suspension direkt auf feste Nährböden gebracht und ebenfalls bei 30°C inkubiert. Die Anreicherungskulturen in Flüssigmedium wurden nach 7 Tagen auf feste Nährböden übertragen. Von diesen Platten wurden gut wachsende Kolonien abgeimpft und im Vereinzelungsausstrich auf Einheitlichkeit geprüft.

Auf diese Weise wurden Bakterienreinkulturen isoliert, die auf den untersuchten Copolymerisaten eindeutig Wachstum zeigten.

Wurden dagegen die oben beschriebenen Bakterienwachstumsversuche zum Vergleich mit den Copolymerisaten 12 und 13 durchgeführt, so konnte kein Bakterienwachstum nachgewiesen werden.

Die Wirkungsweise der erfindungsgemäß in Wasch- und Reinigungsmitteln anzuwendenden biologisch abbaubaren Copolymerisate wird in den folgenden Beispielen erläutert. Die Wirkung der biologisch abbaubaren Copolymerisate als Builder ergibt sich aufgrund der Eigenschaften dieser Polymerisate, Inkrustierungen auf dem Waschgut zu inhibieren, die Waschkraft der Waschmittel zu verstärken und die Vergrauung von weißem Testmaterial beim Waschen in Gegenwart von Schmutzgewebe zu vermindern.

Hierzu werden Testgewebe mehrfachen Wäschen in Waschmittelformulierungen mit den verschiedensten Buildergerüsten unterworfen, wobei die Waschmittelformulierungen entweder kein Copolymerisat oder das gemäß Erfindung anzuwendende biologisch abbaubare Copolymerisat enthalten und zum Vergleich mit dem Stand der Technik ein bisher verwendetes Copolymerisat aus Acrylsäure und Maleinsäure. Die letzten drei Wäschen einer Serie wurden jeweils unter Zusatz von Standardschmutzgewebe durchgeführt. Die Weißgradverminderung des Testgewebes ist dabei ein Maß für die Vergrauung. Die Weißgraderhöhung des Schmutzgewebes ist ein Maß für die Waschkraft des angewendeten Waschmittels und wird als Prozent Remission photometrisch bestimmt.

Werte für die Inkrustierung erhält man, indem man das Polyester/Baumwolle-Mischgewebe bzw. das Baumwollfrotteegewebe nach dem Test verascht. Der Aschegehalt wird in Gewichtsprozent angegeben. Je wirksamer das im Waschmittel enthaltene Polymerisat ist, desto geringer ist der Aschegehalt des Testgewebes. Je nach Wirksamkeit des verwendeten Grundgerüsts des Waschmittels sind jeweils verschiedene Anwendungsmengen der erfindungsgemäß einzusetzenden biologisch abbaubaren Copolymerisate notwendig.

Versuchsbedingungen Gerät:

Launder-O-Meter der Fa. Atlas, Chicago

Zahl der Waschzyklen: 20

Waschflotte: 250 ml, wobei das verwendete Wasser 4 mMol Härte pro Liter aufweist (Kalzium zu Magnesium gleich 4:1)

Waschdauer: 30 Min. bei 60°C (einschließlich Aufheizzeit)

Waschmitteldosierung: 8 g/l

Prüfgewebe: 5 g Polyester (Lagernr. 655)

5 g Polyester/Baumwolle (Lagernr. 776)

5 g Baumwollfrottee (Lagernr. 295)

Schmutzgewebe: 5 g EMPA 104 (Standardschmutzgewebe der Eigenössischen Materialprüfungsanstalt, St. Gallen (CH)) (vgl. Tabelle)

Dieses Schmutzgewebe wurde jeweils im 18. bis 20. Waschzyklus zugegeben. Die in Tabelle 2 angegebenen Waschmittelformulierungen 1 bis 6 wurden hergestellt und untersucht.

Die photometrische Messung der Remission in % wurde im vorliegenden Falle am Elrepho 2000 (Datacolor) bei der Wellenlänge 460 nm gemessen (Barium-Primärweißstandard nach DIN 5033).

Tabelle 2 – Waschmittelformulierungen 1 bis 6

| Waschmittelkomponente | | Zusammensetzung in Gewichtsteilen | | | | | |
|---|---|---|---|---|---|---|---|
| | | 1 | 2 | 3 | 4 | 5 | 6 |
| Tenside | Dodecylbenzolsulfonat (50 %) | 12,5 | 12,5 | - | 12,5 | 12,5 | 12,5 |
| | $C_{13}/C_{15}$-Oxoalkoholpolyglykol-ether (7 Mol Ethylenoxid an 1 Mol $C_{13}/C_{15}$-Oxoalkohol angelagert) | 4,7 | 4,7 | 1,0 | 4,7 | 4,7 | 4,7 |
| | Seife | 2,8 | 2,8 | 2,8 | 2,8 | 2,8 | 2,8 |
| Gerüst-stoffe | Pentanatriumtriphosphat | 20 | | 20 | 10 | 10 | 10 |
| | Zeolith A | | 25 | | 20 | 20 | 20 |
| | Soda | | | 10 | | | 10 |
| | NTA[1] | | | | | 1 | |
| | Phosphonat[2] | | | | 3,5 | | 3,5 |
| Silikate | Na-Disilikat | 6 | 6 | 6 | 6 | 6 | 6 |
| Vergrauungs-inhibitoren | Carboxymethylcellulose | 1 | 1 | 1 | 1 | 1 | 1 |
| Bleichmittel | Na-Perborat | 20 | 20 | 20 | 20 | 20 | 20 |
| Stellmittel | Natriumsulfat | 30,5 | 22 | 27,2 | 16,5 | 19 | 10,5 |

[1] Tri-Natrium-Salz der Nitrilotriessigsäure
[2] Diethylentriaminpentamethylenphosphonat

Die in Tabelle 2 angegebenen Waschmittelformulierungen wurden nach den oben beschriebenen Untersuchungsmethoden getestet. Zum Vergleich mit dem Stand der Technik enthielten die Waschmittelformulierungen entweder kein Copolymerisat oder das Copolymerisat Nr. 12 (Copolymerisat gemäß EP-PS 25 551 aus Acrylsäure und Maleinsäure) bzw. der als Copolymerisat 13 bezeichnete Homopolymerisat der Acrylsäure. Die in den Beispielen und Vergleichsbeispielen jeweils verwendeten Waschmittelformulierungen sowie die damit erhaltenen Ergebnisse sind in den Tabellen 3 bis 5 angegeben.

Die in Tabelle 5 angegebenen Testresultate wurden unter verschärften Bedingungen erhalten. Die Prüftemperatur lag bei 90°C. Das Polyester- und das Polyester/Baumwollgewebe wurde durch Baumwollgewebe (Lager Nr. 222) ersetzt.

Tabelle 3

| Beispiel Nr. | Vergleichsbeispiel Nr. | Waschmittel- formulierung Nr. | Zusatz zur Wasch- mittelformulierung | | % Remision des Schmutzgewebe EMPA 104 |
|---|---|---|---|---|---|
| | | | Gew.-Teile | Copolymer Nr. | |
| - | 1 | 5 | 0 | - | 24 |
| - | 2 | 5 | 3 | 13 | 29,5 |
| 1 | - | 5 | 3 | 8 | 28,9 |
| - | 3 | 6 | 0 | - | 28,9 |
| - | 4 | 6 | 2,5 | 13 | 30,5 |
| 2 | - | 6 | 2,5 | 9 | 32,7 |
| - | 5 | 1 | 0 | - | 32,2 |
| - | 6 | 1 | 2,5 | 13 | 35,3 |
| 3 | - | 1 | 2,5 | 10 | 37,6 |

EP 0 292 766 B1

Wie der Tabelle 3 entnommen werden kann, ergibt der Zusatz der erfindungsgemäß zu verwendenden Copolymeren zu den getesteten Waschmittelformulierungen eine Erhöhung der Waschwirkung dieser Waschmittel.

Tabelle 4 - Prüfung der inkrustierungsinhibierenden Wirkung bei 60°C

| Beispiel Nr. | Vergleichsbeispiel Nr. | Waschmittel-formulierung Nr. | Zusatz zur Wasch-mittelformulierung | | Gew.% Asche bei Testgewebe | |
|---|---|---|---|---|---|---|
| | | | Gew.-Teile | Copolymer Nr. | Baumwolle/ Polyester 776 | Frotte 295 |
| - | 7 | 3 | 0 | - | 1,33 | 3,25 |
| - | 8 | 3 | 3 | 13 | 0,26 | 0,47 |
| 4 | - | 3 | 3 | 1 | 0,51 | 0,66 |
| - | 9 | 4 | 0 | - | 4,11 | 10,52 |
| - | 10 | 4 | 3 | 13 | 0,19 | 0,77 |
| 5 | - | 4 | 3 | 2 | 0,32 | 0,95 |
| - | 11 | 5 | 0 | - | 2,73 | 5,66 |
| - | 12 | 5 | 3 | 13 | 0,62 | 0,80 |
| 6 | - | 5 | 3 | 8 | 0,82 | 1,50 |
| - | 13 | 6 | 0 | - | 1,65 | 3,49 |
| - | 14 | 6 | 2,5 | 13 | 0,34 | 0,70 |
| 7 | - | 6 | 2,5 | 9 | 0,60 | 1,40 |
| - | 15 | 1 | 0 | - | 1,50 | 8,95 |
| - | 16 | 1 | 2,5 | 13 | 1,04 | 3,98 |
| 8 | - | 1 | 2,5 | 10 | 0,95 | 3,62 |
| - | 17 | 2 | 0 | - | 1,04 | 1,82 |
| - | 18 | 2 | 6 | 13 | 0,71 | 0,69 |
| 9 | - | 2 | 6 | 11 | 0,52 | 0,67 |

EP 0 292 766 B1

Tabelle 5 - Prüfung der inkrustierungsinhibierender Wirkung der Copolymerisate bei 90°C

| Beispiel Nr. | Vergleichsbeispiel Nr. | Waschmittel-formulierung Nr. | Zusatz zur Wasch-mittelformulierung | | Gew.% Asche bei Testgewebe | |
|---|---|---|---|---|---|---|
| | | | Gew.-Teile | Copolymer Nr. | Baumwolle 222 | Frotte 295 |
| - | 19 | 2 | 0 | - | 1,46 | 5,95 |
| - | 20 | 2 | 10 | 12 | 0,44 | 2,81 |
| 10 | - | 2 | 10 | 3 | 0,40 | 2,72 |
| 11 | - | 2 | 10 | 4 | 0,42 | 2,51 |
| 12 | - | 2 | 10 | 5 | 0,40 | 2,80 |
| 13 | - | 2 | 10 | 6 | 0,40 | 2,65 |
| 14 | - | 2 | 10 | 7 | 0,38 | 2,20 |

EP 0 292 766 B1

Aus Tabelle 5 ist ersichtlich, daß auch unter erschwerten Bedingungen (Waschtemperatur 90°C, phosphatfreies Waschmittel) die Inkrustierung bei Baumwollnessel stark zurückgedrängt und bei dem voluminösen Baumwollfrottee deutlich reduziert wird.

**Patentansprüche**

1. Verwendung von wasserlöslichen Copolymerisaten, die
a) 99,5 bis 15 Mol.% wenigstens einer monoethylenisch ungesättigten $C_3$- bis $C_6$-Monocarbonsäure,
b) 0,5 bis 20 Mol% wenigstens eines mindestens zwei ethylenisch ungesättigte, nicht konjugierte Doppelbindungen aufweisenden Comonomeren, das erhältlich ist durch Veresterung von
b1) monoethylenisch ungesättigten $C_3$- bis $C_6$-Monocarbonsäuren mit
b2) mehrwertigen, 2 bis 6 C-Atome aufweisenden Alkoholen, wasserlöslichen oder wasserunlöslichen Polyalkylenglykolen eines Molekulargewichts bis 400, wasserlöslichen Polyalkylenglykolen eines Molekulargewichts über 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen,
c) 0 bis 84,5 Mol.% wenigstens einer monoethylenisch ungesättigten $C_4$- bis $C_6$-Dicarbonsäure,
d) 0 bis 20 Mol.% eines oder mehrerer Hydroxyalkylester mit 2 bis 6 C-Atomen in der Hydroxyalkylgruppe von monoethylenisch ungesättigten $C_3$- bis $C_6$-Carbonsäuren und
e) 0 bis 30 Mol.% andere, mit a), b), c) und d) copolymerisierbare, wasserlösliche, monoethylenisch ungesättigte Monomere
mit der Maßgabe einpolymerisiert enthalten, daß die Summe der Angaben in Mol.% a) bis e) immer 100 beträgt und die einen K-Wert von 8 bis 120 (bestimmt am Na-Salz der Copolymerisate nach H. Fikentscher in wäßriger Lösung bei 25°C, einen pH-Wert von 7 und einer Polymerkonzentration des Na-Salzes von 1 Gew.%) haben,
als Zusatz zu Wasch- und Reinigungsmitteln in einer Menge von 0,5 bis 25 Gew.%.
2. Wasch- und Reinigungsmittel auf Basis von Tensiden, gekennzeichnet durch einen Gehalt an Copolymerisaten, die
a) 99,5 bis 15 Mol.% wenigstens einer monoethylenisch ungesättigten $C_3$- bis $C_6$-Monocarbonsäure,
b) 0,5 bis 20 Mol% wenigstens eines mindestens zwei ethylenisch ungesättigte, nicht konjugierte Doppelbindungen aufweisenden Comonomeren, das erhältlich ist durch Veresterung von
b1) monoethylenisch ungesättigten $C_3$- bis $C_6$-Monocarbonsäuren mit
b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen,
c) 0 bis 84,5 Mol.% wenigstens einer monoethylenisch ungesättigten $C_4$- bis $C_6$-Dicarbonsäure,
d) 0 bis 20 Mol.% eines oder mehrerer Hydroxyalkylester mit 2 bis 6 C-Atomen in der Hydroxyalkylgruppe von monoethylenisch ungesättigten $C_3$- bis $C_6$-Carbonsäuren und
e) 0 bis 30 Mol.% andere, mit a), b), c) und d) copolymerisierbare, wasserlösliche, monoethylenisch ungesättigte Monomere
mit der Maßgabe einpolymerisiert enthalten, daß die Summe der Angaben in Mol.% a) bis e) immer 100 beträgt und die einen K-Wert von 8 bis 120 (bestimmt am Na-Salz der Copolymerisate nach H. Fikentscher in wäßriger Lösung bei 25°C, einen pH-Wert von 7 und einer Polymerkonzentration des Na-Salzes von 1 Gew.%) haben.
3. Wasch- und Reinigungsmittel nach Anspruch 2, gekennzeichnet durch einen Gehalt von 0,5 bis 25 Gew.% an wasserlöslichen Copolymerisaten, die
a) 99,5 bis 80 Mol.% wenigstens einer monoethylenisch ungesättigten $C_3$- bis $C_6$-Monocarbonsäure und
b) 0,5 bis 20 Mol.% wenigstens eines mindestens zwei ethylenisch ungesättigte, nicht konjugierte Doppelbindungen aufweisenden Comonomeren einpolymerisiert enthalten, das erhältlich ist durch Veresterung von
(b1) monoethylenisch ungesättigten $C_3$- bis $C_6$-Monocarbonsäuren mit
(b2) mehrwertigen, 2 bis 6 C-Atome aufweisenden Alkoholen, wasserlöslichen oder wasserunlöslichen Polyalkylenglykolen eines Molekulargewichts bis 400, wasserlöslichen Polyalkylenglykolen eines Molekulargewichts über 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen,
wobei die Copolymerisate einen K-Wert von 8 bis 120 aufweisen.
4. Wasch- und Reinigungsmittel nach Anspruch 2, gekennzeichnet durch einen Gehalt an wasserlöslichen Copolymerisaten, die
a) 99 bis 15 Mol.% wenigstens einer monoethylenisch ungesättigten $C_3$- bis $C_6$-Monocarbonsäure,
b) 0,5 bis 15 Mol% wenigstens eines mindestens zwei ethylenisch ungesättigte, nicht konjugierte Dop-

## EP 0 292 766 B1

pelbindungen aufweisenden Comonomeren einpolymerisiert enthält, das erhältlich ist durch Veresterung von

(b1) monoethylenisch ungesättigten $C_3$- bis $C_6$-Monocarbonsäuren mit

(b2) mehrwertigen, 2 bis 6 C-Atome aufweisenden Alkoholen, wasserlöslichen oder wasserunlöslichen Polyalkylenglykolen eines Molekulargewichts bis 400, wasserlöslichen Polyalkylenglykolen eines Molekulargewichts über 400 bis 10 000, Polyglycerinen eines Molekulargewichts bis 2 000, Polyvinylalkohol eines Molekulargewichts bis 10 000 und einwertigen, monoethylenisch ungesättigten $C_3$- bis $C_6$-Alkoholen

c) 0,5 bis 84,5 Mol.% wenigstens einer monoethylenisch ungesättigten $C_4$- bis $C_6$-Dicarbonsäure

mit der Maßgabe einpolymerisiert enthalten, daß die Summe der Angaben in Mol.% a) bis c) immer 100 beträgt und die einen K-Wert von 12 bis 100 (bestimmt am Na-Salz der Copolymerisate nach H. Fikentscher in wäßriger Lösung bei 25°C, einen pH-Wert von 7 und einer Polymerkonzentration des Na-Salzes von 1 Gew.%) haben.

5. Wasch- und Reinigungsmittel nach mindestens einem der Ansprüche 2 bis 4, gekennzeichnet durch einen Gehalt an Copolymerisaten, die als Monomer b) mindestens eine Verbindung einpolymerisiert enthalten, die durch Veresterung von b1) Acrylsäure oder Methacrylsäure und b2) Ethylenglykol, Polyethylenglykol eines Molekulargewichts bis 2.000, Glycerin, Polyglycerinen eines Molekulargewichts bis 2.000, Pentaerythrit, Monosacchariden und Neopentylglykol herstellbar ist.

6. Wasch- und Reinigungsmittel nach mindestens einem der Ansprüche 2 bis 5, dadurch gekennzeichnet, daß sie phosphatfrei sind und mindestens ein Copolymerisat in einer Menge von 2 bis 10 Gew.% enthalten.

**Claims**

1. The use of a water-soluble copolymer which contains

a) from 99.5 to 15 mol% of one or more monoethylenically unsaturated $C_3$- to $C_6$-monocarboxylic acids,

b) from 0.5 to 20 mol% of one or more comonomers which contain two or more ethylenically unsaturated nonconjugated double bonds and which are obtainable by esterification of

b1) monoehtylenically unsaturated $C_3$- to $C_6$-monocarboxylic acids with

b2) polyhydric $C_2$- to $C_6$-alcohols, water-soluble or water-insoluble polyalkylene glycols having a molecular weight of up to 400, water-soluble polyalkylene glycols having a molecular weight of from above 400 to 10 000, polyglycerols having a molecular weight of up to 2 000, polyvinyl alcohol having a molecular weight of up to 10 000 and monohydric, monoethylenically unsaturated $C_3$- ato $C_6$-alcohols,

c) from 0 to 84.5 mol% of one or more monoethylenically unsaturated $C_4$- to $C_6$-dicarboxylic acids,

d) from 0 to 20 mol% of one or more hydroxyalkyl esters of from 2 to 6 carbon atoms in the hydroxyalkyl group of monoethylenically unsaturated $C_3$- to $C_6$-carboxylic acids and

e) from 0 to 30 mol% of other water-soluble, monoethylenically unsaturated monomers copolymerizable with a), b), c) and d) as copolymerized units, with the proviso that the sum of the mol %ages a) to e) is always 100, and which has a K value of from 8 to 120 (determined on the sodium salt by the Fikentscher method on a 1% strength by weight aqueous solution at 25°C and pH 7), as an additive in detergent compositions in an amount of from 0.5 to 25% by weight.

2. A surfactant-based detergent composition which contains a copolymer which contains

a) from 99.5 to 15 mol% of one or more monoethylenically unsaturated $C_3$- to $C_6$-monocarboxylic acids,

b) from 0.5 to 20 mol% of one or more comonomers which contain two or more ethylenically unsaturated nonconjugated double bonds and which are obtainable by esterification of

b1) monoethylenically unsaturated $C_3$- to $C_6$-monocarboxylic acids with

b2) polyhydric $C_2$- to $C_6$-alcohols, water-soluble or water-insoluble polyalkylene glycols having a molecular weight of up to 400, water-soluble polyalkylene glycols having a molecular weight of from above 400 to 10 000, polyglycerols having a molecular weight of up to 2 000, polyvinyl alcohol having a molecular weight of up to 10 000 and monohydric, monoethylenically unsaturated $C_3$- to $C_6$-alcohols,

c) from 0 to 84.5 mol% of one or more monoethylenically unsaturated $C_4$- to $C_6$-dicarboxylic acids,

d) from 0 to 20 mol% of one or more hydroxyalkyl esters of from 2 to 6 carbon atoms in the hydroxyalkyl group of monoethylenically unsaturated $C_3$- to $C_6$-carboxylic acids and

e) from 0 to 30 mol% of other water-soluble, monoethylenically unsaturated monomers copolymerizable with a), b), c) and d) as copolymerized units, with the proviso that the sum of the mol %ages a) to e) is always 100, and which has a K value of from 8 to 120 (determined on the sodium salt by the Fikentscher method on a 1% strength by weight aqueous solution at 25°C and pH 7).

3. A detergent composition as claimed in claim 2 which contains from 0.5 to 25% by weight of a water-soluble copolymer which contains

a) from 99.5 to 80 mol% of one or more monoethylenically unsaturated $C_3$- to $C_6$-monocarboxylic acids,

b) from 0.5 to 20 mol% of one or more comonomers which contain two or more ethylenically unsaturated nonconjugated double bonds and which are obtainable by esterification of

b1) monoethylenically unsaturated $C_3$- to $C_6$-monocarboxylic acids with

b2) polyhydric $C_2$- to $C_6$-alcohols, water-soluble or water-insoluble polyalkylene glycols having a molecular weight of up to 400, water-soluble polyalkylene glycols having a molecular weight of from above 400 to 10 000, polyglycerols having a molecular weight of up to 2 000, polyvinyl alcohol having a molecular weight of up to 10 000 and monohydric, monoethylenically unsaturated $C_3$- to $C_6$-alcohols, as copolymerized units and have a K value or from 8 to 120.

4. A detergent composition as claimed in claim 2 which contains a water-soluble copolymer which contains

a) from 99 to 15 mol% of one or more monoethylenically unsaturated $C_3$- to $C_6$-monocarboxylic acids,

b) from 0.5 to 15 mol% of one or more comonomers which contain two or more ethylenically unsaturated nonconjugated double bonds and which are obtainable by esterification of

b1) monoethylenically unsaturated $C_3$- to $C_6$-monocarboxylic acids with

b2) polyhydric $C_2$- to $C_6$-alcohols, water-soluble or water-insoluble polyalkylene glycols having a molecular weight of up to 400, water-soluble polyalkylene glycols having a molecular weight of from above 400 to 10 000, polyglycerols having a molecular weight of up to 2 000, polyvinyl alcohol having a molecular weight of up to 10 000, and monohydric, monoethylenically unsaturated $C_3$- to $C_6$-alcohols,

c) from 0.5 to 84.5 mol% of one or more monoethylenically unsaturated $C_4$- to $C_6$-dicarboxylic acids

as copolymerized units, with the proviso that the sum of the mol % ages a) to c) is always 100 and which has a k value of from 12 to 100 (determined on a 1% strength by weight aqueous solution of the Na salt of the copolymer at 25°C and pH 7 by the Fikentscher method).

5. A detergent composition as claimed in at least one of claims 2 to 4 which contains a copolymer which contains as copolymerized monomer b) units one or more compounds preparable by esterification of b) acrylic acid or methacrylic acid and b2) ethylene glycol, polyethylene glycol having a molecular weight of up to 2 000, glycerol, polyglycerols having a molecular weight of up to 2 000, pentaerythritol, monosaccharides and neopentylglycol.

6. A detergent composition as claimed in at least one of claims 2 to 5 which is phosphate-free and contains one or more copolymers in an amount of from 2 to 10% by weight.

## Revendications

1. Utilisation de copolymères solubles dans l'eau, qui contiennent, incorporés par polymérisation, de

a) 99,5 à 15% molaires d'au moins un acide monocarboxylique en $C_3$ à $C_6$, à insaturation monoéthylénique,

b) 0,5 à 20% molaires d'au moins un comonomère présentant au moins deux doubles liaisons éthyléniquement insaturées et non conjuguées, que l'on peut obtenir par l'estérification

b1) d'acides monocarboxyliques en $C_3$ à $C_6$, à insaturation monoéthylénique, avec

b2) des alcools comportant de 2 à 6 atomes de carbone, polyhydroxylés, des polyalkylèneglycols, solubles dans l'eau ou insolubles dans l'eau, d'un poids moléculaire qui s'étend jusqu'à 400, des polyalkylèneglycols solubles dans l'eau, d'un poids moléculaire supérieur à 400 et qui s'étend jusqu'à 10.000, des polyglycérines d'un poids moléculaire qui s'étend jusqu'à 2.000, l'alcool polyvinylique d'un poids moléculaire qui s'étend jusqu'à 10.000 et des alcanols en $C_3$ à $C_6$, à insaturation monoéthylénique, monohydroxylés,

c) 0 à 84,5% molaires d'au moins un acide dicarboxylique en $C_4$ à $C_6$ à insaturation monoéthylénique,

d) 0 à 20% molaires d'un ou plusieurs esters hydroxyalkyliques dont les radicaux hydroxyalkyle comportent de 2 à 6 atomes de carbone, d'acides carboxyliques en $C_3$ à $C_6$ à insaturation monoéthylènique et

e) 0 à 30% molaires d'autres monomères à insaturation monoéthylénique, solubles dans l'eau, copolymérisables avec a), b), c) et d),

avec la condition que la somme des données en pourcentages molaires de a) à e) représente toujours 100, et qui possèdent une valeur K de 8 à 120 (déterminée sur le sel de sodium des copolymères, selon le procédé de H. Fikentscher, en solution aqueuse à 25°C, une valeur de pH de 7 et une concentration en polymère du sel de sodium de 1% en poids),

à titre d'additif d'agents de lessivage ou détergents et d'agents de nettoyage, en une proportion de 0,5 à 25% en poids.

2. Détergents ou agents de lessivage et agents de nettoyage à base de substances tensio-actives, caractérisés en ce qu'ils contiennent, incorporés par polymérisation, de

a) 99,5 à 15% molaires d'au moins un acide monocarboxylique en $C_3$ à $C_6$, à insaturation monoéthylénique,

b) 0,5 à 20% molaires d'au moins un comonomère présentant au moins deux doubles liaisons éthyléniquement insaturées et non conjuguées, que l'on peut obtenir par l'estérification

b1) d'acides monocarboxyliques en $C_3$ à $C_6$, à insaturation monoéthylénique, avec

b2) des alcools comportant de 2 à 6 atomes de carbone, polyhydroxylés, des polyalkylèneglycols, solubles dans l'eau ou insolubles dans l'eau, d'un poids moléculaire qui s'étend jusqu'à 400, des polyalkylèneglycols solubles dans l'eau, d'un poids moléculaire supérieur à 400 et qui s'étend jusqu'à 10.000, des polyglycérines d'un poids moléculaire qui s'étend jusqu'à 2.000, l'alcool polyvinylique d'un poids moléculaire qui s'étend jusqu'à 10.000 et des alcanols en $C_3$ à $C_6$, à insaturation monoéthylénique, monohydroxylés,

c) 0 à 84,5% molaires d'au moins una cide dicarboxylique en $C_4$ à $C_6$ à insaturation monoéthylénique,

d) 0 à 20% molaires d'un ou plusieurs esters hydroxyalkyliques dont les radicaux hydroxyalkyle comportent de 2 à 6 atomes de carbone, d'acides carboxyliques en $C_3$ à $C_6$ à insaturation monoéthylénique et

e) 0 à 30% molaires d'autres monomères à insaturation monoéthylénique, solubles dans l'eau, copolymérisables avec a), b), c) et d),

avec la condition que la somme des données en pourcentages molaires de a) à e) représente toujours 100, et qui possèdent une valeur K de 8 à 120 (déterminée sur le sel de sodium des copolymères, selon le procédé de H. Fikentscher, en solution aqueuse à 25°C, une valeur de pH de 7 et une concentration en polymère du sel de sodium de 1% en poids).

3. Détergents ou agents de lessivage et agents de nettoyage suivant la revendication 2, caractérisés en ce qu'ils contiennent de 0,5 à 25% en poids de copolymères solubles dans l'eau, qui contiennent, incorporés par polymérisation, de

a) 99,5 à 80% molaires d'au moins un acide monocarboxylique en $C_3$ à $C_6$, à insaturation monoéthylènique et

b) 0,5 à 20% molaires d'au moins un comonomère présentant au moins deux doubles liaisons éthyléniquement insaturées et non conjuguées, que l'on peut obtenir par l'estérification

b1) d'acides monocarboxyliques en $C_3$ à $C_6$, à insaturation monoéthylénique, avec

b2) des alcools polyhydroxylés comportant de 2 à 6 atomes de carbone, des polyalkylèneglycols, solubles dans l'eau ou insolubles dans l'eau, d'un poids moléculaire qui s'étend jusqu'à 400, des polyalkylèneglycols solubles dans l'eau, d'un poids moléculaire supérieur à 400 et s'étendant jusqu'à 10.000, des polyglycérines d'un poids moléculaire qui s'étend jusqu'à 2.000, l'alcool polyvinylique d'un poids moléculaire qui s'étend jusqu'à 10.000 et des alcools en $C_3$ à $C_6$, à insaturation monoéthylénique, monohydroxylés,

où les copolymères possèdent une valeur K de 8 à 120.

4. Détergents ou agents de lessivage et agents de nettoyage suivant la revendication 2, caractérisés en ce qu'ils contiennent des copolymères solubles dans l'eau, qui contiennent, incorporés par polymérisation, de

a) 99 à 15% molaires d'au moins un acide monocarboxylique en $C_3$ à $C_6$, à insaturation monoéthylénique,

b) 0,5 à 15% molaires d'au moins un comonomère comportant au moins deux doubles liaisons éthyléniquement insaturées et non conjuguées, que l'on peut obtenir par l'estérification.

b1) d'acides monocarboxyliques en $C_3$ à $C_6$, à insaturation monoéthylénique, avec

(b2) des alcools polyhydroxylés, qui comportent de 2 à 6 atomes de carbone, des polyalkylèneglycols, solubles dans l'eau ou insolubles dans l'eau, d'un poids moléculaire qui s'étend jusqu'à 400, des polyalkylèneglycols solubles dans l'eau, d'un poids moléculaire supérieur à 400 et s'étendant jusqu'à 10.000, des polyglycérines d'un poids moléculaire qui s'étend jusqu'à 2.000, l'alcool polyvinylique d'un poids moléculaire qui s'étend jusqu'à 10.000 et des alcools monohydroxylés, en $C_3$ à $C_6$, à insaturaition monoéthylénique,

c) 0,5 à 84,5% molaires d'au moins un acide dicarboxylique en $C_4$ à $C_6$, à insaturation monoéthylénique,

avec la condition que la somme des données en pourcentages molaires a) à c) représente toujours 100, et qui possèdent une valeur K de 12 à 100 (déterminée sur le sel de sodium des copolymères, selon le procédé de H. Fikentscher, en solution aqueuse à 25°C, d'une valeur de pH de 7 et une concentration en polymère du sel de sodium de 1% en poids).

5. Détergents ou agents de lessivage et agents de nettoyage selon au moins l'une des revendication 2 à 4, caractérisés en ce qu'ils contiennent des copolymères, qui, à titre de monomère d), contiennent au moins un composé incorporé par polymérisation, que l'on peut préparer par l'estérification de b1) l'acide acrylique ou l'acide méthacrylique et b2) l'éthylèneglycol, le polyéthylèneglycol d'un poids moléculaire allant jusqu'à 2.000, la glycérine, des polyglycérines d'un poids moléculaire qui s'étend jusqu'à 2.000, la pentaérythrite, des monosaccharides et le néopentylglycol.

6. Détergents ou agents de lessivage et agents de nettoyage selon au moins l'un des revendications 2 à 5, caractérisés en ce qu'ils sont exempts de phosphates et contiennent au moins un copolymère dans la proportion de 2 à 10% en poids.